# EUROPÄISCHE PATENTANMELDUNG

(11) **EP 0 676 144 A1**
(43) Veröffentlichungstag der Anmeldung: **11.10.1995**
(21) Anmeldenummer: 95105095.4
(22) Anmeldetag: 05.04.1995
(51) Int. Cl.: A22C 17/04, A22B 5/00, A22C 21/00, B24C 11/00, B24C 3/06

(54) **Verfahren und Vorrichtung zum Ablösen von Fleisch**

(30) Priorität: 06.04.1994 DE 4411502
(71) Anmelder: Seitz, Alexander, D-53227 Bonn (DE)
(72) Erfinder: Seitz, Alexander, D-53227 Bonn (DE)
(74) Vertreter: Freischem, Werner, Dipl.-Ing.

(57) **Zusammenfassung**

Die Erfindung bezieht sich auf ein Verfahren zum Ablösen von Fleisch vom Skelett insbesondere von Kleintieren, wie Hühner, Puten oder dergleichen, bei dem die geschlachteten, gerupften und ausgenommenen Tierkörper von einer Transportvorrichtung einer Behandlungsstation zugeführt werden, in welcher das Fleisch abgelöst wird. Das Ablösen ist sehr zeitaufwendig, so daß hohe Lohnkosten entstehen. Damit das Fleisch, mit geringen Kosten vom Tierskelett abgelöst werden kann, erfolgt das Ablösen mit Hilfe eines Eispartikel enthaltenden Strahlmittels.

## Beschreibung

Die Erfindung bezieht sich auf ein Verfahren zum Ablösen von Fleisch vom Skelett insbesondere von Kleintieren, wie Hühner, Puten oder dergleichen, bei dem die geschlachteten, gerupften und ausgenommenen Tierkörper von einer Transportvorrichtung einer Behandlungsstation zugeführt werden, in welcher das Fleisch abgelöst wird.

Bei der Fließbandverarbeitung von Hühnern wird bisher das Fleisch durch Metzger oder Facharbeiter mittels Messern vom Tierskelett abgelöst. Dieses Ablösen von Fleisch ist bei diesen Kleintieren sehr zeitaufwendig und verteuert erheblich die Kosten für die Verarbeitung von Fleisch zu Pasteten, Brät oder dergleichen.

Der Erfindung liegt die Aufgabe zugrunde, ein Verfahren zu schaffen, mit welchem das Fleisch, insbesondere von Kleintieren, mit geringen Kosten vom Tierskelett abgelöst werden kann.

Diese Aufgabe wird erfindungsgemäß dadurch gelöst, daß das Ablösen des Fleisches mit Hilfe eines Eispartikel enthaltenden Strahlmittels erfolgt.

Bei diesem Strahlverfahren werden Eispartikel auch in Form von Kügelchen oder Granalien von einem Treibgas mit großer Geschwindigkeit gegen den Tierkörper geschleudert, so daß sich das Fleisch in Fetzen ablöst.

Weil dem Fleisch bei der Weiterverarbeitung ohnehin Wasser zugesetzt werden muß, sind die im abgelösten Fleisch zunächst enthaltenen Eispartikel, die zu Wasser aufschmelzen, nicht störend. Der dabei auftretende Kühleffekt ist meist erwünscht. Wird zum Ablösen des Fleisches mehr Wassereis benötigt als der Fleischmasse an Wasser zugesetzt werden darf, dann kann das von den aufgeschmolzenen Eispartikeln stammende Wasser abgeschöpft werden, indem man die abgelöste Fleischmasse zusammendrückt.

Durch entsprechende Kühlung der Eispartikel, zum Beispiel mittels flüssigem CO₂, kann deren Härte eingestellt werden. Auch kann die Größe der Eispartikel durch bekannte Verfahren oder Vorrichtungen auf einen optimalen Wert gebracht werden.

Aus den folgenden Schriften: DE 25 43 019 C2; DE 35 05 675 A1; DE 37 20 992 C2; DE 37 38 246 A1; und DE 39 37 221 C2 sind Verfahren und Vorrichtungen bekannt zum Erzeugen von Eispartikel enthaltenden Strahlmitteln. Diese bekannten Verfahren und Vorrichtungen dienen ausschließlich zum Reinigen oder Polieren von Oberflächen. Mit Hilfe dieser bekannten Vorrichtungen und Verfahren läßt sich aber auch mit Vorteil das Fleisch von in Förderbändern hängenden Tierkörpern ablösen. Dabei kann mit Hilfe einer von Hand gesteuerten Düse das Fleisch abgelöst werden. Es ist aber auch möglich, mehrere starr oder beweglich installierte Düsen auf den zu behandelnden Tierkörper zu richten, so daß das Ablösen des Fleisches vollautomatisch, zum Beispiel auch im Durchlaufverfahren, geschehen kann.

Um das abgelöste Fleisch von gegebenenfalls abgelösten Knochen zu trennen, kann das Fleisch durch einen Rost hindurchgedrückt werden, welches die Knochen zurückhält.

Mit Hilfe von Druckgas oder Druckluft werden Wassereiskristalle mit großer Geschwindigkeit aus einer Düse gegen den Tierkörper geschleudert, so daß sich Fleischfetzen von diesem Körper ablösen. Die Eispartikel können durch Abschaben oder Brechen größerer Eisstücke mechanisch erzeugt werden, bevor sie von einem Gas oder Luftstrom mitgerissen werden. Es ist aber auch möglich, die Eispartikel durch Zusammenführen von Wasser und einem unterkühlten Gas oder einem Kältemittel vor der Düse in einem Gefrierbehälter oder in der Strahldüse zu erzeugen.

Das abgelöste Fleisch von Hühnern, Puten, Gänsen, Enten, Kaninchen oder dergleichen kann insbesondere zur Herstellung von Pasteten, Wurstbrät, Frikasse und Hühnerfleisch-Weißwurst oder dergleichen weiterverarbeitet werden.

## Patentansprüche

1. Verfahren zum Ablösen von Fleisch vom Skelett insbesondere von Kleintieren, wie Hühner, Puten oder dergleichen, bei dem die geschlachteten, gerupften und ausgenommenen Tierkörper von einer Transportvorrichtung einer Behandlungsstation zugeführt werden, in welcher das Fleisch abgelöst wird, dadurch gekennzeichnet, daß das Ablösen des Fleisches mit Hilfe eines Eispartikel enthaltenden Strahlmittels erfolgt.

2. Verfahren nach Anspruch 1, dadurch gekennzeichnet, daß als Strahlmittel ein Gemisch aus Druckluft und Wassereispartikeln verwenden wird.

3. Verfahren nach Anspruch 1 oder 2, dadurch gekennzeichnet, daß das abgelöste Fleisch durch einen die Knochen zurückhaltenden Rost gedrückt wird.

4. Vorrichtung zur Durchführung des Verfahrens nach Patentanspruch 1, bei der geschlachtete, gerupfte und ausgenommene Tierkörper in einer Transportvorrichtung, insbesondere einer Förderbahn, hängend einer Behandlungsstation zugeführt werden,
dadurch gekennzeichnet, daß in der Behandlungsstation mindestens eine auf den zu behandelnden Tierkörper gerichtete Strahldüse installiert ist.
